(19) Europäisches Patentamt

European Patent Office

Office européen des brevets

(11) Veröffentlichungsnummer: **0 278 241 B1**

(12) # EUROPÄISCHE PATENTSCHRIFT

(45) Veröffentlichungstag der Patentschrift: **08.07.92**

(21) Anmeldenummer: **88100357.8**

(22) Anmeldetag: **13.01.88**

(51) Int. Cl.⁵: **B01D 53/36**, B01D 53/34

(54) **Verfahren zum Einmischen von Ammoniak in einen Rauchgasstrom.**

(30) Priorität: **11.02.87 DE 3704151**
**18.05.87 DE 3716584**

(43) Veröffentlichungstag der Anmeldung:
**17.08.88 Patentblatt 88/33**

(45) Bekanntmachung des Hinweises auf die
Patenterteilung:
**08.07.92 Patentblatt 92/28**

(84) Benannte Vertragsstaaten:
**BE DE GB IT NL SE**

(56) Entgegenhaltungen:
**WO-A-85/03645**
**DE-A- 3 337 793**
**DE-A- 3 515 843**
**DE-B- 2 938 654**

(73) Patentinhaber: **DEUTSCHE BABCOCK ANLA-**
**GEN GMBH**
**Parkstrasse 29, Postfach 4**
**W-4150 Krefeld 11(DE)**

(72) Erfinder: **Brands, Heinz-Josef**
**Brüder Grimm Weg 12**
**W-4200 Oberhausen(DE)**

(74) Vertreter: **Planker, Karl-Josef, Dipl.-Phys.**
**c/o Deutsche Babcock Anlagen AG Park-**
**strasse 29 Postfach 4 + 6**
**W-4150 Krefeld 11(DE)**

EP 0 278 241 B1

**Beschreibung**

Die Erfindung betrifft ein Verfahren zum Einmischen von Ammoniak in einen Rauchgasstrom gemäß dem Oberbegriff des Patentanspruchs 1.

Die bekanntesten großtechnisch eingesetzten Rauchgasentstickungsverfahren arbeiten auf Ammoniakbasis. Die im Rauchgas enthaltenen Stickoxide reagieren mit Ammoniak zu Stickstoff und Wasserdampf. Bei den sogenannten selektiven katalytischen Verfahren läuft die Reaktion bei etwa 250 - 500 °C mit Hilfe eines Katalysators ab. Bei dem selektiven nichtkatalytischen Verfahren läuft sie bei Temperaturen um 1000 °C ohne Katalysator.

Der Zusatz von Ammoniak erfolgt durchweg in der Weise, daß flüssiges Ammoniak einem Flüssiggastank entnommen und in einem Verdampfer in die Gasphase überführt wird und daß der Ammoniakdampf - gegebenenfalls unter Zusatz von Druckluft - in den Rauchgasstrom eingemischt wird.

Transport, Lagerung und Handhabung von flüssigem Ammoniak sind aber mit Schwierigkeiten und Gefahren verbunden. Daher müssen besondere Sicherheitsvorkehrungen getroffen und Genehmigungen eingeholt werden.

In der DE-A-34 02 771, die sich mit einem speziellen nichtkatalytischen Verfahren befaßt, wird schon beiläufig erwähnt, daß das Ammoniak auch in Wasser gelöst sein kann.
Die Durchführung dieses Vorschlags stößt aber in der Praxis auf Schwierigkeiten. Dosiert man die wäßrige Ammoniaklösung direkt in den Rauchgasstrom, so besteht vor allem bei Lastschwankungen die Gefahr, daß das Wasser nicht vollständig verdampft; es können sich Wassertropfen bilden, die die Katalysatoren schädigen und im Bereich der Dosierstelle Korrosion verursachen können.

Auch die Überlegung, die Ammoniaklösung in einem separaten Verdampfer zu verdampfen und das Ammoniak-Wasserdampfgemisch in den Rauchgasstrom einzudüsen, führt zu Problemen. Wegen der stark voneinander abweichenden Dampfdrücke von Ammoniak und Wasser ist es äußerst schwierig, kontinuierlich eine konstant bleibende Ammoniakmenge zuzuführen. Die richtige, stöchiometrische Dosierung ist aber eine unerläßliche Voraussetzung für den Verfahrensablauf. Ist die Dosierung zu niedrig, so werden die Stickoxide teilweise nicht reduziert. Liegt sie zu hoch, so tritt Ammoniak am Schornstein aus.

Durch die DE-A-35 13 810 ist ein Verfahren zur katalytischen Entstickung eines Abgasstromes bekannt, bei dem zwecks gleichmäßiger Verteilung des Ammoniaks über den Katalysatorquerschnitt von dem Abgasstrom ein Teilstrom abgezweigt, mit Ammoniak versetzt und dem Abgas vor der Umsetzung wieder zugemischt wird.

Die WO-A-85 03645 beschreibt bereits ein Verfahren zur katalytischen Reinigung der Abgase von Feuerungsanlagen. Dabei wird eine chemische Verbindung, z.B. Ammoniak, das auch in Wasser gelöst sein kann, in einen Teilstrom der Abgase eindosiert. Anschließend wird der Teilstrom wieder in den Hauptstrom der Abgase zurückgeführt. Bei hohem Flugaschegehalt der Abgase können im Einsprühbereich Ablagerungen und Anbackungen auftreten.

Der Erfindung liegt die Aufgabe zugrunde, ein Verfahren gemäß dem Oberbegriff des Patentanspruchs 1 zu entwickeln, bei dem die mit dem Transport, der Lagerung und Handhabung des Ammoniaks verbundenen Probleme umgangen werden und gleichzeitig die Schwierigkeiten, die bisher dem praktischen Einsatz von wäßriger Ammoniaklösung entgegenstanden, vermieden werden.

Diese Aufgabe wird gemäß der Erfindung durch die im Kennzeichen des Anspruchs 1 angegebene Maßnahme gelöst.

Die in Anspruch 2 angegebene Variante des Verfahrens ist von besonderem Vorteil bei der nichtkatalytischen Entstickung. Da hierbei die Umwandlung der Stickoxide in einer homogenen Gasphasenreaktion erfolgt, ist eine besonders gleichmäßige Einmischung des Ammoniaks in den Rauchgasstrom erforderlich, die man durch Verwendung eines gespannten Trägergases erreichen kann. Der gespannte Dampf kann zum Beispiel einem Kessel entnommen werden, ohne daß zur Erzeugung des Überdrucks ein zusätzliches Druckerhöhungsgebläse erforderlich ist.

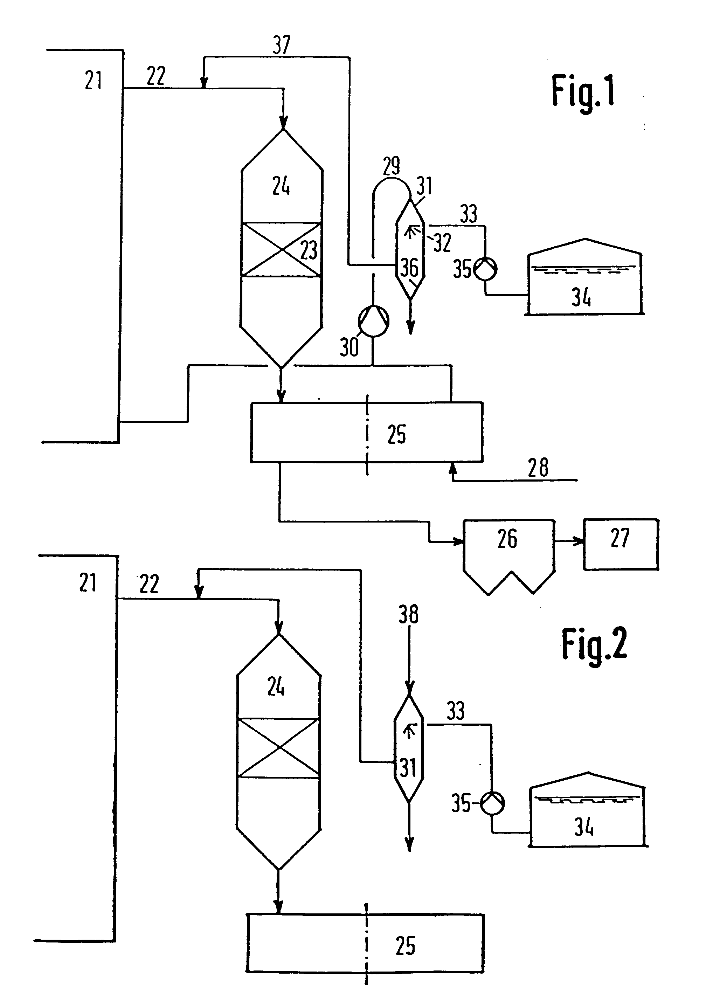

Die Zeichnungen dienen zur Veranschaulichung der Erfindung anhand von schematisch dargestellten Ausführungsbeispielen. Die Figuren 1 und 2 zeigen Fließbilder verschiedener zur Durchführung des erfindungsgemäßen Verfahrens geeigneter Rauchgasreinigungsanlagen.

Bei der Anlage gemäß Figur 1 ist von einem Dampfkessel 21 ein Rauchgaskanal 22 zu dem mit Katalysatorpackungen 23 bestückten Reaktor 24 geführt, von dort über die Primärseite eines regenerativen Wärmetauschers 25, ein Elektrofilter 26 und eine Entschwefelungsanlage 27 zu einem nicht dargestellten Schornstein.

Von einer Frischluftleitung 28, die über die Sekundärseite des regenerativen Wärmetauschers 25 zur Feuerung des Dampfkessels 21 geführt ist, geht eine Zweigleitung 29 aus.

Diese ist mit einem Gebläse 30 versehen und mündet von oben in eine Mischkammer 31, die im wesentlichen die Form eines schlanken Zylinders mit senkrechter Achse hat. Kurz unter der Einmündung der Zweigleitung 29 ist in der Mischkammer 31 eine Sprühdüse 32 angeordnet, die durch eine Leitung 33 mit einem Behälter 34 verbunden ist. Dieser ist mit wäßriger Ammoniaklösung gefüllt. In der Leitung 33 ist eine Pumpe 35 angeordnet. Die Mischkammer 31 hat an ihrem unteren Ende einen Auslaufkonus 36 mit Auslaufrohr und Absperrhahn. Kurz über dem Auslaufkonus ist seitlich an die Mischkammer 31 ein Rohr 37 angeschlossen, das in den Rauchgaskanal 22 mündet, und zwar vor dessen Einmündung in den Reaktor 24. Das Rohr 37 geht in eine innerhalb des Rauchgaskanals 22 angeordnete, nicht dargestellte Düsenanordnung über.

Im Betrieb wird von der aus dem regenerativen Wärmetauscher 25 austretenden vorgewärmten Frischluft ein konstanter Teilstrom abgezweigt. In diesen Teilstrom wird in der Mischkammer 31 wäßrige Anmoniaklösung eingesprüht, die durch die Pumpe 35 in dosierter Menge aus dem Behälter 34 zugeführt wird. Die Flüssigkeit verdampft in dem heißen Luftstrom. Der mit Ammoniak und Wasserdampf vermischte Luftstrom wird über das Rohr 37 in den Rauchgasstrom eingeleitet. Dieser gelangt anschließend in den Reaktor 24, wo mit Hilfe der Katalysatorpackungen 23 die im Rauchgas enthaltenen Stickoxide mit dem Ammoniak reagieren und in unschädliche Stoffe umgewandelt werden. Die von dem abgezweigten Frischluftstrom mitgeführte Wärmemenge wird im regenerativen Wärmetauscher 25 zurückgewonnen.

Das in Figur 2 dargestellte abgewandelte Ausführungsbeispiel unterscheidet sich von dem soeben beschriebenen Ausführungsbeispiel gemäß Figur 1 nur dadurch, daß der Mischkammer 31 statt der vorgewärmten Frischluft über eine Leitung 38 Dampf zugeführt wird. Dieser wird zum Beispiel dem Dampfkessel 21 entnommen. Der Dampf ist so trocken, daß er die gesamte Flüssigkeit aufnehmen kann, ohne daß sich Tropfen bilden. Vorzugsweise ist der Dampf gespannt; sein Druck beträgt zum Beispiel 2 - 4 bar.

## Patentansprüche

1. Verfahren zum Einmischen von Ammoniak in einen Rauchgasstrom zwecks Umwandlung der in Rauchgas enthaltenen Stickoxide in unschädliche Stoffe, wobei eine wäßrige Ammoniaklösung in einen Trägergastrom eindosiert und darin verdampft wird und wobei der Trägergasstrom anschließend dem Rauchgasstrom zugemischt wird, dadurch gekennzeichnet, daß als Trägergas vorgewärmte Frischluft oder trockener Wasserd verwendet wird.

2. Verfahren nach Anspruch 1, dadurch gekennzeichnet, daß als Trägergas trockener, gespannter Wasserdampf eingesetzt wird.

## Claims

1. Process for mixing ammonia into a flue gas stream, for the purpose of converting the oxides of nitrogen contained in flue gas into harmless substances, an aqueous ammonia solution being metered into a carrier gas stream and being evaporated therein and the carrier gas stream then being admixed with the flue gas stream, characterized in that prewarmed fresh air or dry water vapour is used as the carrier gas.

2. Process according to Claim 1, characterized in that dry water vapour under tension is used.

## Revendications

1. Procédé pour mélanger de l'ammoniac dans un courant de gaz de fumée en vue de la transformation des oxydes d'azote contenus dans le gaz de fumée en substances non nuisibles, dans lequel une solution aqueuse d'ammoniac est dosée dans un courant de gaz porteur et est évaporée dedans, le courant de gaz porteur étant ensuite mélangé au courant de gaz de fumée, caractérisé en ce que l'on utilise, comme gaz porteur, de l'air frais préchauffé ou de la vapeur d'eau sèche.

2. Procédé suivant la revendication 1, caractérisé en ce qu'on met en oeuvre, comme gaz porteur, de la vapeur d'eau sèche sous pression.

Fig.1

Fig.2